# EUROPEAN PATENT SPECIFICATION

(11) **EP 2 849 961 B1**
(45) Date of publication and mention of the grant of the patent: **14.08.2019**
(21) Application number: 12735623.6
(22) Date of filing: 18.05.2012
(51) Int. Cl.: B60H 1/00

(54) **VENTILATION CONTROL SYSTEM AND METHOD FOR A CABIN OF A VEHICLE**
BELÜFTUNGSSTEUERUNGSSYSTEM UND -VERFAHREN FÜR EINE FAHRZEUGKABINE
SYSTÈME ET PROCÉDÉ DE COMMANDE DE VENTILATION POUR UNE CABINE DE VÉHICULE

(43) Date of publication of application: 25.03.2015
(73) Proprietor: VOLVO LASTVAGNAR AB, 405 08 Göteborg (SE)
(72) Inventor: ROHI, Frederic, 38540 Saint Just Chaleyssin (FR); LAUDET, Frederic, 69200 Venissieux (FR)
(74) Representative: Goreaud, Alexandra
(86) International application number: PCT/IB2012/001190
(87) International publication number: WO 2013/171530

(56) References cited:
- EP-A1- 0 812 716
- EP-A1- 2 165 865
- DE-A1- 4 119 475

## Description

### Field of the invention

The present invention relates to a ventilation control system for a cabin of a vehicle, and a method for controlling the ventilation in a cabin of a vehicle.

### Technological background

Document DE41 19 475 A1 discloses a ventilation control system for a cabin of a vehicle, comprising first, second and third air ducts, each air circuit being capable of directing an air sub flow at a flow rate and that activation of a dedicated switch enables the user to increase or decrease as desired the amount of air delivered in the associated duct. The prior art document also discloses that the fan control and the damper actuator control act such that the amount of air at the middle and lower air outlet groups remains constant. Vehicles have been provided with a ventilation control system of their cabin for many years. Typically, an air flow is blown into the cabin; said air flow can be heated when the outside temperature is low, especially in winter, and cooled when the outside temperature is high, especially in summer.

Such a system generally comprises at least three air circuits which direct an air sub flow towards openings arranged in distinct locations inside the vehicle cabin, for example to blow air towards the windscreen, the head, the torso and/or the feet of the cabin occupant.

A conventional ventilation control system typically comprises an electronic control unit which is capable of controlling some parameters of the air flow. Said parameters can include the air flow temperature, the air flow rate, and the air distribution, i.e. the respective rates of the air sub flows in the air circuits.

Generally, the electronic control unit can be operated in an automatic mode, in which the parameters are automatically controlled in order to reach a preset target temperature in the cabin - in a transient mode - and to maintain said target temperature in the cabin - in a permanent mode.

The electronic control unit can alternatively be operated in a manual or a semi automatic mode, in which at least one of the parameters is manually set by the user, according to his/her preferences.

More specifically, a widespread request among users is to have the opportunity to manually set the air distribution so that it adequately suits his/her needs and wishes. By way of an example, some users do not like having air blown towards their face, while others may feel like having air blown both towards their face and their feet even if it may not be a common request.

However, the ventilation control systems of the prior art are not fully satisfactory in this respect.

Indeed, such conventional systems generally provide a very limited number of predetermined air distributions among which the user can choose. But other air distributions, which in some cases may better fit the user's wishes, cannot be implemented.

Besides, it is seldom possible to achieve an accurate setting of the air sub flow rates in the air circuits, unless there are provided specific means which are complex and expensive. Moreover, the adjustment of such means can be difficult for the user, especially if he/she is driving.

Another weakness of many such conventional systems lies in the fact that, when air is blown through at least two air circuits, there is no precise information about the respective air sub flow rates. In other words, the user cannot precisely know the current air distribution, neither can he adjust it precisely.

It therefore appears that, from several standpoints, there is room for improvement in ventilation control systems and methods for vehicle cabins.

### Summary

It is an object of the present invention to provide an improved ventilation control system for a cabin of a vehicle which can overcome the drawbacks of the prior art systems.

More precisely, an object of the invention is to provide such a ventilation control system which allows the user to more accurately adjust the air distribution, to more precisely personalise it, and/or to more easily set it.

Another object of the invention is to reliably inform the user of the current air distribution, in particular to enable him/her to even better adjust it.

According to a first aspect, the invention relates to a ventilation control system for a cabin of a vehicle according to claim 1.

By providing a dedicated control member, that may be for instance a push button, a tactile surface, a control lever, a rotating button, a temperature sensitive element or an infra-red sensitive element, for setting the sub flow rate in one given air circuit, the invention makes it possible to simplify the system, especially regarding the structure and the processing. This results in a more robust and less expensive system.

However, this advantage is obtained without detriment to the adjustment accuracy of the sub flow rates and the possibility to customize the air distribution. In particular, because one control member is provided for each air circuit, it is possible for the user to individually set the sub flow rates without being forced to choose among a very limited number of predetermined air distributions.

Moreover, the distribution input device thereby proves easy to use, both because only one control member is provided for a given air circuit, and because one control member is provided for each of said air circuits rather than a single input device for setting the global air distribution.

According to the invention the distribution input device and the electronic control unit are designed so that manual actuations of each dedicated control member cause one-way variations of the sub-flow in the corresponding air circuit.

By "one-way variations", it is meant that depending on the embodiment of the invention the distribution input device and the electronic control unit are designed so that manual actuations of each dedicated control member can only increase the air sub flow rate in the corresponding air circuit or to the contrary in an alternative embodiment of the invention manual actuations of each dedicated control member can only decrease the air sub flow rate in the corresponding air circuit.

Such a dedicated control member is a device which is very easy to actuate, especially for a user that keeps driving while setting the parameters of the system. As a consequence, setting the air distribution with the ventilation control system according to the invention is easy, quick and intuitive, which is particularly advantageous when the user is driving.

It can be envisaged that the distribution input device and the electronic control unit are designed so that a manual actuation of one dedicated control member causes an increase of the rate of the air sub-flow in the corresponding air circuit.

Preferably each dedicated control member is actionable between two states.

Preferably each dedicated control member is a key and a pressure on one dedicated key causes a one-way variation of the rate of the air sub-flow in the corresponding air circuit.

The term "key" can mean a button that can be pressed by a user, or a zone on a touch screen.

In an embodiment of the invention a pressure on one dedicated key causes an increase of the rate of the air sub-flow in the corresponding air circuit.

According to other advantageous but optional features considered in isolation or in any technical combination :
- the distribution input device and the electronic control unit are designed so that a manual actuation of said dedicated control member further causes an automatic decrease of the rate of at least one of the other air sub-flows, the overall air flow rate remaining substantially constant;
- in response to a manual actuation of one dedicated control member, the electronic control unit is designed to automatically adjust the variation of the sub flow rate in another or several other air circuits according to programmed rules;
- each air circuit is equipped with at least one flow controller which is controlled by the electronic control unit in order to adjust the rate of the corresponding air sub flow according to the rate manually selected by the user for one air sub flow, the rate of each air sub flow being individually set to a chosen level among N levels, where N ≥ 3, the sum of all air sub flow rates being equal to the air flow rate.
- the system comprises a display (41) able to show the current air distribution;
- the display comprises, for each air circuit, one set of N elements, where N ≥ 3, the number of elements in a set which is switched on depending on the corresponding current sub flow rate;
- the first distribution area (21) includes the windscreen (2) and/or area of the head of the cabin occupant;
- the second distribution area (22) includes the area of the torso of the cabin occupant and/or the front part of the side windows (3);
- the third distribution area (23) includes the area of the feet of the cabin occupant and/or the area located along the lower part of the side doors.

According to a second aspect, the invention relates to a method for controlling the ventilation in a cabin of a vehicle which is equipped with a ventilation control system according to claim 13.

According to the invention a manual actuation of the one dedicated control member causes an increase of the sub flow rate in said corresponding air circuit.

According to the invention, sub flow rates in other air circuits are automatically adjusted in such a way that the sum of all air sub flow rates remains substantially constant.

Thus, setting the air distribution is intuitive and customizing it is very easy although the system is simple.

These and other features and advantages will become apparent upon reading the following description in view of the drawing attached hereto representing, as a non-limiting example, an embodiment of a system according to the invention.

### Brief description of the drawings

The following detailed description of one embodiment of the invention is better understood when read in conjunction with the appended drawings, it being however understood that the invention is not limited to the specific embodiment disclosed.
Figure 1 is a schematic and partial representation of a vehicle cabin including a ventilation control system according to an embodiment of the invention;
Figure 2 is a schematic representation of an embodiment of a control board of the system according to the invention;
Figure 3 is a detailed view of the system of Figure 1, schematically showing how the electronic control unit controls the sub flow rates in response to a pressure on a key of the distribution input device;
Figures 4 to 7 show successive current air distribution displays when a given key is pressed several times;
Figure 8 show displays of all possible air distributions with an embodiment of the system according to the invention.

### Detailed description of the invention

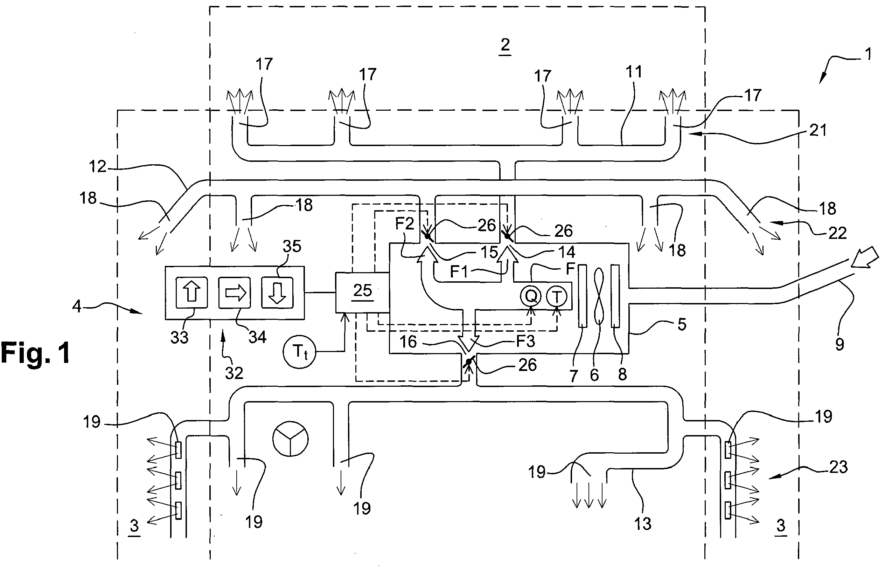

In Figure 1 is schematically and partially shown a cabin 1 of a vehicle, said cabin 1 comprising a windscreen 2 and side windows 3.

The invention provides a ventilation control system 4 for the cabin 1. This system 4 can make it possible to bring and maintain the temperature in the cabin 1 to a target temperature Tt that is preset by the user, i.e. the cabin occupant, who is typically the vehicle driver.

The ventilation control system 4 comprises a unit 5 which typically includes a fan 6, a heater 7 and a cooler 8.

By means of the fan 6, outside air can be sucked in a channel 9, can enter the unit 5 and pass through the heater 7 and the cooler 8. Therefore, the unit 5 is capable of providing a heated or cooled air flow F which will be directed towards the cabin 1.

In practice, the heater 7 can be a radiator, and the cooler 8 can be an evaporator forming part of a refrigerant circuit of an air conditioning system. Such a refrigerant circuit typically carries a refrigerant in a loop through a compressor, a condenser, an expander and an evaporator capable of cooling an air flow directed towards the cabin.

The ventilation control system 4 also comprises air circuits connected to the unit 5 and designed to carry some of the air flow towards various locations in the cabin 1 and to blow it inside the cabin. More precisely, in the embodiment shown in Figure 1, the system 4 comprises a first, a second and a third air circuits 11, 12, 13. However, according to the invention, the number of circuits is not limited to three.

Each air circuit 11, 12, 13 may be connected to at least one dedicated outlet 14, 15, 16 provided on the unit 5 and is capable of directing an air sub flow F1, F2, F3 towards the cabin 1 through at least one opening 17, 18, 19. Each air sub flow forms at least part of the air flow. In other words, the rate Q1, Q2, Q3 of each sub flow F1, F2, F3 can range between 0% and 100% of the rate Q of the air flow F.

The openings 17, 18, 19 of the first, second and third air circuits 11, 12, 13 are located respectively in a distinct first, second and third distribution areas 21, 22, 23 in the cabin 1.

For example, the first distribution area 21, in which are located the first openings 17 of the first air circuit 11, can include the windscreen 2 and/or the area near the head of the cabin occupant. In other words, the first distribution area 21 can be situated in the upper part of the cabin 1.

The second distribution area 22, in which are located the second openings 18 of the second air circuit 12, can include the area of the torso of the cabin occupant and/or the front part of the side windows 3. In other words, the second distribution area 22 can be situated in the middle part of the cabin 1.

As regards the third distribution area 23, in which are located the third openings 19 of the third air circuit 13, it can include the area of the feet of the cabin occupant and/or the area located along the lower part of the side doors. In other words, the third distribution area 23 can be situated in the lower part of the cabin 1.

The ventilation control system 4 further comprises an electronic control unit 25. Said unit can be capable of automatically controlling the temperature T of the air flow F and the rate Q of the air flow F in order to reach or maintain a target temperature Tt in the cabin 1. The target temperature can be set by the user of the vehicle. To that end, the electronic control unit 25 may monitor the temperature of the outside air, of the air blown inside the cabin 1 through the openings 17, 18, 19, and/or of the ambient air in the cabin 1, by means of appropriate sensors (not shown). In concrete terms, controlling the air flow temperature T can be achieved by controlling the heater 7 and the cooler 8, while controlling the air flow rate Q can be achieved by controlling the speed of fan 6. The speed of fan 6 is controlled in order to adjust Q between Q=0 and Qmax.

Another parameter that can be set by the ventilation control system 4 is the air distribution. The air distribution corresponds to the respective rates of the air sub flows in the air circuits. In other words, the air distribution not only includes the locations from where air is blown inside the cabin 1, but also how much air is blown from each of said locations.

The air distribution can be set manually by a user, as will be explained hereafter. Moreover, there can exist a programmed set of rules for automatically determining an optimized air distribution which forms a set data of the system 4, and which is generally determined by the vehicle manufacturer so as to optimize the regulation of the cabin temperature and to suit most users.

In an implementation of the invention, each air circuit 11, 12, 13 may be equipped with at least a flow controller 26, such as a flap. Said flow controller 26 is controlled by the electronic control unit 25 in order to adjust the rate Q1, Q2, Q3 of the corresponding air sub flow F1, F2, F3 according to the rate Q1, Q2 or Q3 manually selected by the user for one air sub flow F1, F2 or F3. The rate of each air sub flow is individually set to a chosen level among N levels, where N ≥ 3, the sum of all air sub flow rates being equal to the air flow rate Q.

For example, in the illustrated embodiment, N=4, and each rate Q1, Q2, Q3 can be set to one of the following levels : 0, 1/3, 2/3 and 100% of the air flow rate Q, while Q1+Q2+Q3=Q. One given sub flow rate can be individually chosen, but if the air flow rate Q remains unchanged, then the rate of the other sub flows will be impacted accordingly.

Of course, the invention is not limited to four levels for the sub flow rates. It can for example be envisaged to provide three possible levels (such as 0%, 50%, 100%), five possible levels (such as 0%, low rate, medium rate, high rate, 100%) or even more.

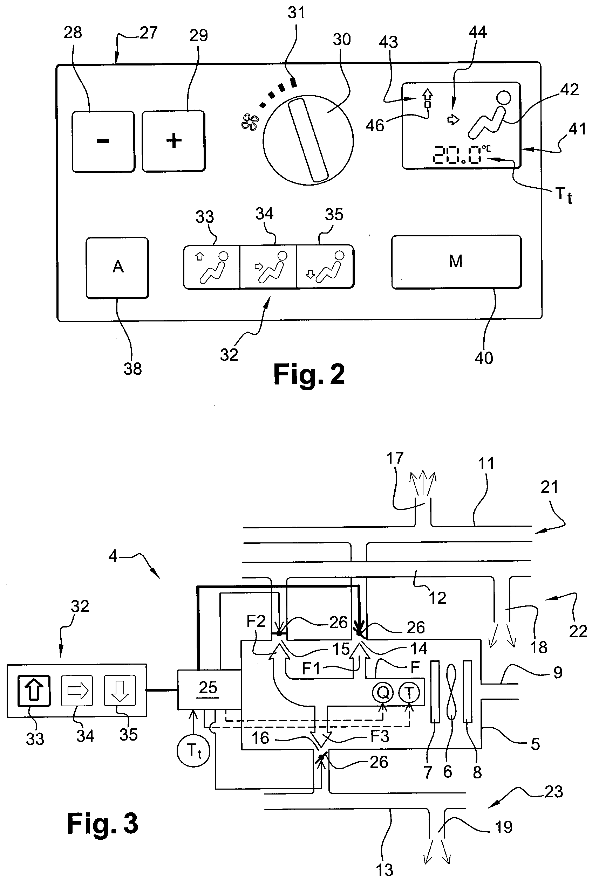

In order for the user to operate the system 4, said system 4 is provided with a control board 27, as shown in Figure 2, which is operationally connected to the electronic control unit 25.

On the control board 27 are provided means for manually setting some parameters of the system 4, the air flow F and the air sub flows F1, F2, F3. Such means include one or several human/machine interface input devices.

First of all, there are provided means for setting the target temperature Tt in the cabin 1, which can typically comprise one "-" key 28 and one "+" key 29. In the whole specification, the term "key" can mean a button that can be pressed by a user, or a zone on a touch screen. Means for setting the temperature Tt can also be a rotating button. In this case a manual rotation of the rotating button in the clockwise direction can increase the target temperature Tt whereas a rotation in the counterclockwise direction can decrease the target temperature Tt.

Besides, the control board 27 comprises means for manually setting the air flow rate Q. These means can comprise a rotating button 30. Turning the button 30 clockwise can typically result in increasing the air flow rate Q. In addition, there may be provided a display of the current air flow rate Q, by means of illuminated points 31, the number of which is all the more great as the air flow rate Q is high.

Furthermore, the system 4 comprises a distribution input device 32 for manually setting a user defined air distribution. The distribution input device 32 is connected to the electronic control unit 25 so that said electronic control unit 25 can control the rates Q1, Q2, Q3 of the air sub flows F1, F2, F3 according to said user defined air distribution.

According to the invention, the distribution input device 32, which can typically be arranged on the control board 27, comprises, for each air circuit 11, 12, 13, exactly one dedicated control member that can be for instance a tactile surface, a control lever, a rotating button, a temperature sensitive element, an infra-red sensitive element or, such as represented on figures 1 to 3, a dedicated key for setting the rate of the air sub flow in said air circuit. A dedicated key is a preferred embodiment because it is a simple control member that is user friendly. In practice, there may be represented on a given dedicated key a drawing of the corresponding distribution area 21, 22, 23 in the cabin 1, for a quick understanding of the device 32 by the user.

In concrete terms, in the illustrated embodiment, the distribution input device 32 comprises:
- a first dedicated key 33 for setting the air sub flow rate Q1 in the first air circuit 11;
- a second dedicated key 34 for setting the air sub flow rate Q2 in the second air circuit 12;
- and a third dedicated key 35 for setting the air sub flow rate Q3 in the third air circuit 13.

The ventilation control system 4 can thus be operated in a manual mode, where the user can choose manually each parameter, no automatic regulation being made on the air flow rate Q, and the air distribution.

Alternatively, the ventilation control system 4 can be operated in an automatic mode, in order to reach or maintain in the cabin 1 the target temperature Tt that the user has previously set, for example by means of keys 28 and 29. The operation of said automatic mode can be selected by the user by means of an automatic mode actuator which can typically comprise a key 38 arranged on the control board 27. It can also be envisaged a semi automatic mode, where only part of the parameters are set by the user, the other parameters being automatically controlled by the electronic control unit 25.

The control board 27 may further comprise a key 40 for memorizing a current and preferred air distribution and for recalling it when needed.

In an embodiment of the invention, as shown in Figure 2, the system 4 can comprise a display 41 able to show the current air distribution, i.e. not only the locations from which air is blown inside the cabin 1, and the location from which no air is blown, but also the respective rates Q1, Q2, Q3 of the air sub flows F1, F2, F3 in the air circuits 11, 12, 13.

This display 41 may also show the target temperature Tt which has been set by means of keys 28 or 29. This display 41 can be arranged on the control board 27.

Various means can be used to indicate on the display 41 the value of one given sub flow rate, such as a sliding cursor, a more or less bright arrow, etc. Preferably, the display 41 may include a drawing 42 of a person in a seated position to help to quickly visualize the current air distribution.

The display 41 can comprise, for each air circuit 11, 12, 13, one set 43, 44, 45 of N elements 46, where N ≥ 3, the number of elements in a set which is switched on depending on the corresponding current sub flow rate Q1, Q2, Q3.

The number "N" of elements 46 in a set 43, 44, 45 preferably corresponds to the number of possible levels for the air sub flow rate Q1, Q2, Q3. In the disclosed embodiment, as previously described, N=4, but other embodiments can be envisaged.

Thanks to this display it is easy for the user to precisely know the current air distribution and to adjust it

Preferably, the elements 46 of each set 43, 44, 45 can be arranged in a line. For example, the display 41 can comprises three lines starting from a same central area 47, with one line being directed upwards, one line being directed laterally, and one line being directed downwards. This disposition can especially be used in a system 4 comprising:
- a first air circuit 11 which is capable of blowing air substantially upwards, typically towards the windscreen 2 and/or the head of the cabin occupant, and which is represented by the line of a first set 43, directed upwards;
- a second air circuit 12 which is capable of blowing air substantially horizontally, typically towards the torso of the cabin occupant and/or the front part of the side windows 3, and which is represented by the line of a second set 44, directed laterally;
- and a third air circuit 13 which is capable of blowing air substantially downwards, typically towards the feet of the cabin occupant and/or the area located along the lower part of the side doors, and which is represented by the line of a third set 45, directed downwards.

According to a possible implementation of the invention, the elements 46 of at least one set are arranged in a line, an end element 46a of the line assuming the form of an arrowhead while the other elements 46b of the line assuming substantially the form of squares, the elements 46, 46a, 46b being close enough so that, when all elements 46 are switched on, the whole set 43, 44, 45 looks like an arrow.

Therefore, the display 41 is particularly intuitive and easy to understand. This contributes to the quick and simple manual setting of an air distribution by the user insofar as he/she can directly and clearly see the results of the actuation of the distribution input device 32. Furthermore, the display 41 shows the current air distribution in a very realistic manner, which accurately reflects the physical reality.

Alternatively, instead of arrow shapes, the drawing 42 of the person in a seated position may display sub-flow rate information. The drawing 42 may be divided into three display parts corresponding to three air sub flows F1, F2, F3 and corresponding distribution areas 21, 22, 23 in the cabin 1. In this case each display part is filled with a colour and the filling level of each display part depends on the level of the current sub-flow rate of the corresponding sub flows F1, F2, F3.

A method for controlling the ventilation in the cabin 1 which is equipped with the same or with an equivalent ventilation control system 4 such as previously described may comprise the following steps :
a) the system 4 detects a manual actuation of a dedicated key 33, 34, 35 of one air circuit 11, 12, 13 ;
b) depending on at least the manual actuation of the dedicated key 33, 34, 35 and depending on the current level of the sub flow rate, the electronic control unit 25 determines the new sub flow rate Q1, Q2, Q3, desired by the user, in said one air circuit;
c) the electronic control unit 25 controls the corresponding flow controller 26 to adjust sub flow rate Q1, Q2, Q3 in said one air circuit 11, 12, 13 according to the determined air flow rate Q1, Q2, Q3;
d) the electronic control unit 25 controls the corresponding flow controllers 26 to adjust the sub flow rates Q1, Q2, Q3 in other air circuits 11, 12, 13 depending on the determined air flow rate and according to programmed rules.

The manual actuation of the dedicated key 33 may be a finger pulse to select step by step the desired corresponding sub flow rate Q1, Q2, Q3 or a continuous pressure by user's finger in order to quickly reach the level of the corresponding sub flow rate Q1, Q2, Q3 that is desired by the user.

In a method according to the invention a manual actuation on the dedicated key 33, 34, 35 increases the sub flow rate Q1, Q2, Q3 in said one air circuit 11, 12, 13.

Further the control unit 25 may control flow controllers 26 to adjust sub flow rates Q1, Q2, Q3 in other air circuits 11, 12, 13 so that the sum of all air sub flow rates Q1, Q2, Q3 remains substantially constant.

The operation of the system 4 regarding the manual setting of the user defined air distribution by means of the distribution input device 32 will now be more precisely described.

The distribution input device 32 and the electronic control unit 25 can be designed so that a pressure on one dedicated key 33, 34, 35 causes an increase in the rate Q1, Q2, Q3 of the air sub-flow F1, F2, F3 in the corresponding air circuit 11, 12, 13, if for instance said rate (Qi where Qi is Q1, Q2 or Q3) is not already at its maximum value. For example, if the air flow rate Q is controlled so as to remain substantially constant, a pressure on one dedicated key causes an increase in the rate of the air sub-flow in the corresponding air circuit if said rate (Qi) is below the current air flow rate Q determined by the system or by the user (Q determined).

Otherwise, if the air sub-flow rate in question (Qi) is already at its maximum value (Qi = Q determined), then a pressure on the corresponding dedicated key may have no consequences on the air distribution.

In an alternative embodiment, if the air sub-flow rate in question (Qi) is already at its maximum value (Qi = Q determined), then a new pressure on the corresponding dedicated key may automatically increase the current air flow rate Q (Q determined). Additional pressures on the corresponding dedicated key can increase the current air flow rate Q until it reaches its maximum value Qmax.

For example, as schematically represented on Figure 3 in thick lines, a pressure on the first push button 33 leads to an opening movement of the flow controller 26 of the first air circuit 11, controlled by the electronic control unit 25, in order to increase the corresponding air sub flow rate Q1. At the same time, an additional element 46 of the first set 43 is switched on in order to indicate that the air sub flow rate Q1 has gained one level.

According to an implementation of the invention, the distribution input device 32 and the electronic control unit 25 can be designed so that, if one given sub flow rate Q1, Q2, Q3 is not already at its maximum value (Qi < Q determined), a pressure on the corresponding dedicated key 33, 34, 35 further causes a decrease in the rate Q1, Q2, Q3 of at least one of the other air sub-flows F1, F2, F3, the overall air flow rate Q such as determined by the user or the system remaining substantially constant.

With this implementation, the only way for the user to set the overall air flow rate Q is by turning the rotating button 30.

Alternatively, it could be envisaged, when a sub flow rate Q1, Q2, Q3 has reached a maximum value (Qi = Q determined), that a new pressure on the corresponding dedicated key 33, 34, 35 causes the overall air flow rate Q to increase. That can lead to the increase of the sub flow rate in question (Qi > Q determined) without modifying the other sub flow rates Q1, Q2, Q3.

In another implementation, it could be envisaged, if the at least one flow controller 26 of an air circuit 12, 12, 13 is already fully open whereas the corresponding sub flow rate (Qi) has not reached a maximum value (Qi < Q determined), for instance because flow controllers 26 of other circuits are not closed, that a new pressure on the corresponding dedicated key 33, 34, 35 causes an increase of the overall air flow rate Q. In this case, that can lead to the increase of all the sub flow rates Q1, Q2, Q3, provided that the corresponding flow controller is not already closed, without modifying the sub flow rate distribution between the sub-flows F1, F2, F3. If necessary the speed of fan 6 may be controlled in order to increase the overall air flow rate Q until Qmax.

Preferably, subsequent to the decrease in the rate Q1, Q2, Q3 of at least one of the other air sub-flows F1, F2, F3, one element 46 of the corresponding set 43, 44, 45 is switched on.

It can be envisaged that, in response to a pressure on one push button 33, 34, 35, the electronic control unit 25 be designed to automatically control the variation of the sub flow rate Q1, Q2, Q3 in another or several other air circuits 11, 12, 13, according to programmed rules. Programmed rules can be determined by the vehicle manufacturer or modified, by an authorized professional or by the driver himself/herself. Programmed rules may be stored in a non-volatile memory of the electronic control unit 25 and may be modified thanks to a human interface or an input interface of the vehicle to allow the connection of an hardware system such as a laptop. Parameters such as inside and outside temperature, position of the sun, etc. can also be taken into account for the automatic regulation of other sub flow rates.

In other words, the user can choose the distribution area 21, 22, 23 in which he/she wants more air to be blown. However, the distribution area in which less air is blown, as a result, cannot be chosen by the user. This disposition is generally not prejudicial to the user comfort since, on the one hand, the programmed rules have been drawn up to suit most users and, on the other hand, the system according to the invention nevertheless allows the user to greatly customize the air distribution.

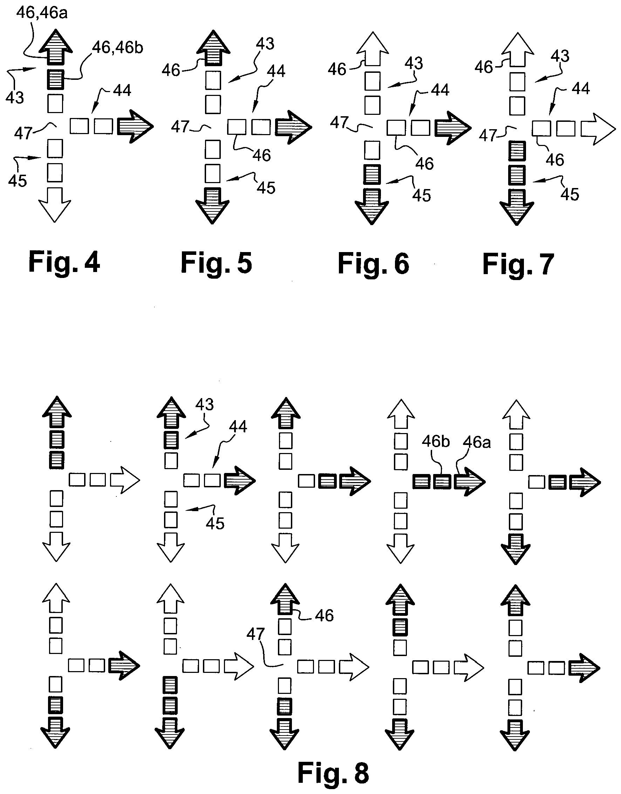

A concrete example of the setting of a user defined air distribution is described with reference to figures 4 to 7.

Initially, one third of the air flow rate Q is blown by the second air circuit 12 and two thirds are blown by the first air circuit 11. As shown in figure 4, this is represented on the display 41 by: one element 46 switched on in the second set 44, two elements 46 switched on in the first set 43, and no element switched on in the third set 45.

In case the user wants more air to be blown through the third air circuit 13, he/she presses the corresponding dedicated key 35 to successively increase the rate Q3 of the corresponding air sub flow F3 one level by one level, until said rate Q3 has reached the desired level, here the full rate Q.

Further to a first actuation of the dedicated key 35, the air sub flow rate Q3 in the third circuit 13 is one third of the air flow rate Q. As a consequence, one of the other sub flow rates is automatically decreased by the system so that Q remains substantially constant. According to the programmed rules that may have been previously determined by the vehicle manufacturer, according to an implementation of the invention, it is the first sub flow rate Q1 which is decreased, the second sub flow rate Q2 remaining unchanged. However, the opposite solution could be envisaged.

As a consequence, as shown in figure 5, one element 46 of the first set 43 has been switched off, while one element 46 of the third set 45 has been switched on.

It has to be noted that, preferably, the first element of a set to be switched on is the arrowhead shaped element 46a, said element 46a also being the last element of the set to be switched off. Thus, one set always look like an arrow (provided the corresponding sub flow rate is not 0), the length of which being more or less long depending on the rate of the corresponding sub flow.

A further actuation of the key 35 leads to an increase of flow rate in third circuit 13 and simultaneously to the complete closing of the flow controller 26 of the first air circuit 11. Then, Q1 = 0, Q2 = Q/3 and Q3 = 2/3 Q, as displayed according to figure 6.

Finally, a further actuation of the key 35 leads to an increase of flow rate in third circuit 13 and simultaneously to the complete closing of the flow controller 26 of the second air circuit 12. Then, Q1 = Q2 = 0, and Q3 = Q, as displayed according to figure 7.

In the present example, an additional pressure on key 35 does not change the air distribution since the corresponding sub flow rate is already at its maximum value.

Of course, the user can press the key of another air circuit until the corresponding sub flow rate has reached the desired level, in case the user wants to have air blown towards two distribution areas 21, 22, 23 of the cabin 1.

In figure 8 is illustrated an example of the set of air distributions that can be selected by the user by means of the system 4 according to the invention, said distributions being represented by the corresponding drawing on the display 41. The elements 46 with thick lines and which are hatched correspond to elements which are switched on, whereas elements 46 with thin lines and which are not hatched correspond to elements which are switched off. In practice, preferably, switched off elements 46 cannot be seen on the display 41, as shown in figure 2.

In this example, one can appreciate that the system 4 makes it possible for the user, with only three buttons each button having a single action, to choose from ten different user defined air distributions which is a fairly high number as compared with conventional ventilation control systems. Of course, the more the number N of possible levels is high, the more precise is the setting of the air distribution.

Furthermore, some user defined air distributions can be not very different from other ones, which means that the system 4 allows a very precise setting of the air distribution. The system 4 provides intermediate air distributions as compared to conventional systems which only offer three or four possibilities to the user.

This customization of the system is particularly positive for the driver in terms of comfort, perceived quality and brand image. Besides, the safety is improved since (i) the user only has to press a dedicated key instead of doing multiple actions, and (ii) the setting of the air distribution is intuitive and can be immediately and permanently checked on the display.

The invention is of course not limited to the embodiment described above as an example, but encompasses all technical equivalents and alternatives of the means described as well as combinations thereof as defined in the appended claims.

## Claims

1. A ventilation control system for a cabin (1) of a vehicle, said system (4) comprising:
- a unit (5) capable of providing an air flow (F) directed towards the cabin (1);
- at least a first, second and third air circuits (11, 12, 13), each air circuit being capable of directing an air sub flow (F1, F2, F3) - forming at least part of the air flow (F) - towards the cabin (1) through at least one opening (17, 18, 19), the openings of the first, second and third air circuits being located respectively in a distinct first, second and third distribution areas (21, 22, 23) in the cabin (1);
- a distribution input device (32) which comprises for each air circuit (11, 12, 13) a dedicated control member (33, 34, 35) to allow the user to manually select the rate (Q1, Q2, Q3) of the air sub flow (F1, F2, F3) in said air circuit (11, 12, 13) ;
- an electronic control unit (25) which is connected to the distribution input device (32) and which is capable of controlling the rates (Q1, Q2, Q3) of the air sub flows (F1, F2, F3) according to the rate (Q1, Q2, Q3) of the air sub flow (F1, F2, F3) manually selected for one air circuit (11, 12, 13),
**characterized in that** the distribution input device (32) comprises only one dedicated control member (33, 34, 35) for each air circuit and the manual actuations of each dedicated control member (33, 34, 35) can only cause one-way variations of the sub-flow rate (Q1, Q2, Q3) in the corresponding air circuit (11, 12, 13).such that rates (Q1, Q2, Q3) in other air circuits (11, 12, 13) are then automatically adjusted in such a way that the sum of all air sub flow rates (Q1, Q2, Q3) remains substantially constant.

2. The system according to claim 1, **characterized in that** the distribution input device (32) and the electronic control unit (25) are designed so that a manual actuation of one dedicated control member (33, 34, 35) causes an increase of the rate (Q1, Q2, Q3) of the air sub-flow (F1, F2, F3) in the corresponding air circuit (11, 12, 13).

3. The system according to claim 1 or 2, **characterized in that** the dedicated control member of each air circuit (11, 12, 13) is a key and **in that** a pressure on one dedicated key (33, 34, 35) causes an one-way variation of the rate (Q1, Q2, Q3) of the air sub-flow (F1, F2, F3) in the corresponding air circuit (11, 12, 13).

4. The system according to claim 3, **characterized in that** a pressure on one dedicated key (33, 34, 35) causes an increase of the rate (Q1, Q2, Q3) of the air sub-flow (F1, F2, F3) in the corresponding air circuit (11, 12, 13).

5. The system according to claim 2 or 4, **characterized in that** the distribution input device (32) and the electronic control unit (25) are designed so that a manual actuation of said dedicated control member (33, 34, 35) further causes an automatic decrease of the rate (Q1, Q2, Q3) of at least one of the other air sub-flows (F1, F2, F3), the overall airflow rate (Q) remaining substantially constant.

6. The system according to any one of claims 1 to 5, **characterized in that**, in response to a manual actuation of one dedicated control member (33, 34, 35), the electronic control unit (25) is designed to automatically adjust the variation of the sub flow rate (Q1, Q2, Q3) in another or several other air circuits (11, 12, 13), according to programmed rules.

7. The system according to any one of claims 1 to 6, **characterized in that** each air circuit (11, 12, 13) is equipped with at least one flow controller (26) which is controlled by the electronic control unit (25) in order to adjust the rate (Q1, Q2, Q3) of the corresponding air sub flow (F1, F2, F3) according to the rate (Q1, Q2, Q3) manually selected by the user for one air sub flow (F1, F2, F3), the rate (Q1, Q2, Q3) of each air sub flow being individually set to a chosen level among N levels, where N ≥ 3, the sum of all air sub flow rates (Q1, Q2, Q3) being equal to the air flow rate (Q).

8. The system according to any one of claims 1 to 7, **characterized in that** it comprises a display (41) able to show the current air distribution.

9. The system according to claim 8, **characterized in that** the display (41) comprises, for each air circuit (11, 12, 13), one set (43, 44, 45) of N elements (46, 46a, 46b), where N ≥ 3, the number of elements in a set which is switched on depending on the corresponding current sub flow rate (Q1, Q2, Q3).

10. The system according to any one of claims 1 to 9, **characterized in that** the first distribution area (21) includes the windscreen (2) and/or area of the head of the cabin occupant.

11. The system according to any one of claims 1 to 10, **characterized in that** the second distribution area (22) includes the area of the torso of the cabin occupant and/or the front part of the side windows (3).

12. The system according to any one of claims 1 to 11, **characterized in that** the third distribution area (23) includes the area of the feet of the cabin occupant and/or the area located along the lower part of the side doors.

13. A method for controlling the ventilation in a cabin (1) of a vehicle which is equipped with a ventilation control system (4) comprising :
- a unit (5) capable of providing an airflow (F) directed towards the cabin (1);
- at least a first, second and third air circuits (11, 12, 13), each air circuit being capable of directing an air sub flow (F1, F2, F3) - forming at least part of the air flow (F) - towards the cabin (1) through at least one opening (17, 18, 19), the openings of the first, second and third air circuits being located respectively in a distinct first, second and third distribution areas (21, 22, 23) in the cabin (1);
- a dedicated control member (33, 34, 35) for each air circuit (11, 12, 13);
- an electronic control unit (25) which is connected to the distribution input device (32) and which is capable of controlling the rates (Q1, Q2, Q3) of the air sub flows (F1, F2, F3)
**characterized in that** the method comprises the following steps :
a) detecting a manual actuation of one dedicated control member (33, 34, 35);
b) depending on at least the manual actuation of said one dedicated control member and depending on the current level of the corresponding sub flow rate, determining the new sub flow rate (Q1, Q2, Q3), desired by the user, in the corresponding air circuit;
c) adjusting sub flow rate (Q1, Q2, Q3) in said corresponding air circuit (11, 12, 13) according to the determined air flow rate (Q1, Q2, Q3);
d) adjusting the sub flow rates (Q1, Q2, Q3) in other air circuits (11, 12, 13) depending on the determined air flow rate and according to programmed rules,
and **characterized in that** the manual actuation of the only one dedicated control member (33, 34, 35) of the distribution input device (32) for each air circuit (11, 12, 13) only causes an increase of the sub flow rate (Q1, Q2, Q3) in said corresponding air circuit (11, 12, 13) and causes a decrease of the sub flow rate (Q1, Q2, Q3) in at least one other circuit (11, 12, 13), such that in step d), sub flow rates (Q1, Q2, Q3) in other air circuits (11, 12, 13) are automatically adjusted in such a way that the sum of all air sub flow rates (Q1, Q2, Q3) remains substantially constant.

14. A method according to claim 13, **characterized in that** dedicated control member (33, 34, 35) for each air circuit (11, 12, 13) is a key and **in that** a pressure on one dedicated key (33, 34, 35) causes an increase in the rate (Q1, Q2, Q3) of the air sub-flow (F1, F2, F3) in the corresponding air circuit (11, 12, 13).

## Patentansprüche

1. Belüftungssteuerungssystem für eine Kabine (1) eines Fahrzeugs, wobei das System (4) umfasst:
- eine Einheit (5), die einen in Richtung der Kabine (1) gerichteten Luftstrom (F) bereitstellen kann;
- wenigstens einen ersten, zweiten und dritten Luftkreislauf (11, 12, 13), wobei jeder Luftkreislauf einen Luftunterstrom (F1, F2, F3) - der wenigstens einen Teil des Luftstroms (F) bildet - durch wenigstens eine Öffnung (17, 18, 19) in Richtung der Kabine (1) richten kann, wobei sich die Öffnungen des ersten, zweiten und dritten Luftkreislaufs jeweils in einem unterschiedlichen ersten, zweiten und dritten Verteilungsbereich (21, 22, 23) in der Kabine (1) befinden;
- eine Verteilungseingabevorrichtung (32), die für jeden Luftkreislauf (11, 12, 13) ein zugeordnetes Steuerungselement (33, 34, 35) umfasst, um es dem Benutzer zu erlauben, die Rate (Q1, Q2, Q3) des Luftunterstroms (F1, F2, F3) in dem Luftkreislauf (11, 12, 13) manuell auszuwählen;
- eine elektronische Steuereinheit (25), die mit der Verteilungseingabevorrichtung (32) verbunden ist und die Raten (Q1, Q2, Q3) der Luftunterströme (F1, F2, F3) gemäß der Rate (Q1, Q2, Q3) des für einen Luftkreislauf (11, 12, 13) manuell ausgewählten Luftunterstroms (F1, F2, F3) steuern kann,
**dadurch gekennzeichnet, dass** die Verteilungseingabevorrichtung (32) nur ein zugeordnetes Steuerungselement (33, 34, 35) für jeden Luftkreislauf umfasst und die manuellen Betätigungen jedes zugeordneten Steuerungselements (33, 34, 35) nur Einwegs-Änderungen der Unterstromrate (Q1, Q2, Q3) in dem entsprechenden Luftkreislauf (11, 12, 13) bewirken können, so dass Raten (Q1, Q2, Q3) in anderen Luftkreisläufen (11, 12, 13) dann automatisch derart angepasst werden, dass die Summe aller Luftunterstromraten (Q1, Q2, Q3) im Wesentlichen konstant bleibt.

2. System nach Anspruch 1, **dadurch gekennzeichnet, dass** die Verteilungseingabevorrichtung (32) und die elektronische Steuereinheit (25) so ausgelegt sind, dass eine manuelle Betätigung eines zugeordneten Steuerungselements (33, 34, 35) eine Erhöhung der Rate (Q1, Q2, Q3) des Luftunterstroms (F1, F2, F3) in dem entsprechenden Luftkreislauf (11, 12, 13) bewirkt.

3. System nach Anspruch 1 oder 2, **dadurch gekennzeichnet, dass** das zugeordnete Steuerungselement jedes Luftkreislaufs (11, 12, 13) eine Taste ist und dass ein Druck auf eine zugeordnete Taste (33, 34, 35) eine Einwegs-Änderung der Rate (Q1, Q2, Q3) des Luftunterstroms (F1, F2, F3) in dem entsprechenden Luftkreislauf (11, 12, 13) bewirkt.

4. System nach Anspruch 3, **dadurch gekennzeichnet, dass** ein Druck auf eine zugeordnete Taste (33, 34, 35) eine Erhöhung der Rate (Q1, Q2, Q3) des Luftunterstroms (F1, F2, F3) in dem entsprechenden Luftkreislauf (11, 12, 13) bewirkt.

5. System nach Anspruch 2 oder 4, **dadurch gekennzeichnet, dass** die Verteilungseingabevorrichtung (32) und die elektronische Steuereinheit (25) so ausgelegt sind, dass eine manuelle Betätigung des zugeordneten Steuerungselements (33, 34, 35) ferner eine automatische Senkung der Rate (Q1, Q2, Q3) von wenigstens einem der anderen Luftunterströme (F1, F2, F3) bewirkt, wobei die Gesamtluftstromrate (Q) im Wesentlichen konstant bleibt.

6. System nach einem der Ansprüche 1 bis 5, **dadurch gekennzeichnet, dass**, in Ansprechung auf eine manuelle Betätigung eines zugeordneten Steuerungselements (33, 34, 35), die elektronische Steuereinheit (25) dazu ausgelegt ist, die Änderung der Unterstromrate (Q1, Q2, Q3) in einem anderen oder mehreren anderen Luftkreisläufen (11, 12, 13) gemäß programmierter Regeln automatisch anzupassen.

7. System nach einem der Ansprüche 1 bis 6, **dadurch gekennzeichnet, dass** jeder Luftkreislauf (11, 12, 13) mit wenigstens einer Stromsteuereinrichtung (26) ausgestattet ist, die durch die elektronische Steuereinheit (25) gesteuert wird, um die Rate (Q1, Q2, Q3) des entsprechenden Luftunterstroms (F1, F2, F3) gemäß der durch den Benutzer für einen Luftunterstrom (F1, F2, F3) manuell ausgewählten Rate (Q1, Q2, Q3) anzupassen, wobei die Rate (Q1, Q2, Q3) jedes Luftunterstroms individuell auf ein gewähltes Niveau unter N Niveaus eingestellt wird, wobei N ≥ 3, wobei die Summe aller Luftunterstromraten (Q1, Q2, Q3) gleich der Luftstromrate (Q) ist.

8. System nach einem der Ansprüche 1 bis 7, **dadurch gekennzeichnet, dass** es eine Anzeige (41) umfasst, die die gegenwärtige Luftverteilung zeigen kann.

9. System nach Anspruch 8, **dadurch gekennzeichnet, dass** die Anzeige (41), für jeden Luftkreislauf (11, 12, 13), einen Satz (43, 44, 45) von N Elementen (46, 46a, 46b) umfasst, wobei N ≥ 3, wobei die Anzahl von Elementen in einem Satz, die eingeschaltet sind, von der gegenwärtigen Unterstromrate (Q1, Q2, Q3) abhängt.

10. System nach einem der Ansprüche 1 bis 9, **dadurch gekennzeichnet, dass** der erste Verteilungsbereich (21) die Windschutzscheibe (2) und/oder den Bereich des Kopfes des Kabineninsassen umfasst.

11. System nach einem der Ansprüche 1 bis 10, **dadurch gekennzeichnet, dass** der zweite Verteilungsbereich (22) den Bereich des Oberkörpers des Kabineninsassen und/oder den vorderen Teil der Seitenfenster (3) umfasst.

12. System nach einem der Ansprüche 1 bis 11, **dadurch gekennzeichnet, dass** der dritte Verteilungsbereich (23) den Bereich der Füße des Kabineninsassen und/oder den entlang des unteren Teils der Seitentüren befindlichen Bereich umfasst.

13. Verfahren zum Steuern der Belüftung in einer Kabine (1) eines Fahrzeugs, das mit einem Belüftungssteuerungssystem (4) ausgestattet ist, das umfasst:
- eine Einheit (5), die einen in Richtung der Kabine (1) gerichteten Luftstrom (F) bereitstellen kann;
- wenigstens einen ersten, zweiten und dritten Luftkreislauf (11, 12, 13), wobei jeder Luftkreislauf einen Luftunterstrom (F1, F2, F3) - der wenigstens einen Teil des Luftstroms (F) bildet - durch wenigstens eine Öffnung (17, 18, 19) in Richtung der Kabine (1) richten kann, wobei sich die Öffnungen des ersten, zweiten und dritten Luftkreislaufs jeweils in einem unterschiedlichen ersten, zweiten und dritten Verteilungsbereich (21, 22, 23) in der Kabine (1) befinden;
- ein zugeordnetes Steuerungselement (33, 34, 35) für jeden Luftkreislauf (11, 12, 13);
- eine elektronische Steuereinheit (25), die mit einer Verteilungseingabevorrichtung (32) verbunden ist und die Raten (Q1, Q2, Q3) der Luftunterströme (F1, F2, F3) steuern kann,
**dadurch gekennzeichnet, dass** das Verfahren die folgenden Schritte umfasst:
a) Erfassen einer manuellen Betätigung eines zugeordneten Steuerungselements (33, 34, 35);
b) abhängig von wenigstens der manuellen Betätigung des einen zugeordneten Steuerungselements und abhängig von dem gegenwärtigen Niveau der entsprechenden Unterstromrate, Bestimmen der neuen Unterstromrate (Q1, Q2, Q3), die von dem Benutzer gewünscht wird, in dem entsprechenden Luftkreislauf;
c) Anpassen der Unterstromrate (Q1, Q2, Q3) in dem entsprechenden Luftkreislauf (11, 12, 13) gemäß der bestimmten Luftstromrate (Q1, Q2, Q3);
d) Anpassen der Unterstromraten (Q1, Q2, Q3) in anderen Luftkreisläufen (11, 12, 13) abhängig von der bestimmten Luftstromrate und gemäß programmierter Regeln,
und **dadurch gekennzeichnet, dass** die manuelle Betätigung des nur einen zugeordneten Steuerungselements (33, 34, 35) der Verteilungseingabevorrichtung (32) für jeden Luftkreislauf (11, 12, 13) nur eine Erhöhung der Unterstromrate (Q1, Q2, Q3) in dem entsprechenden Luftkreislauf (11, 12, 13) bewirkt und eine Senkung der Unterstromrate (Q1, Q2, Q3) in wenigstens einem anderen Kreislauf (11, 12, 13) bewirkt, so dass in Schritt d) Unterstromraten (Q1, Q2, Q3) in anderen Luftkreisläufen (11, 12, 13) automatisch derart angepasst werden, dass die Summe aller Luftunterstromraten (Q1, Q2, Q3) im Wesentlichen konstant bleibt.

14. Verfahren nach Anspruch 13, **dadurch gekennzeichnet, dass** das zugeordnete Steuerungselement (33, 34, 35) für jeden Luftkreislauf (11, 12, 13) eine Taste ist und dass ein Druck auf eine zugeordnete Taste (33, 34, 35) eine Erhöhung der Rate (Q1, Q2, Q3) des Luftunterstroms (F1, F2, F3) in dem entsprechenden Luftkreislauf (11, 12, 13) bewirkt.

## Revendications

1. Système de régulation de ventilation pour un habitacle (1) d'un véhicule, ledit système (4) comprenant :
- une unité (5) capable de fournir un flux d'air (F) dirigé vers l'habitacle (1) ;
- au moins des premier, deuxième et troisième circuits d'air (11, 12, 13), chaque circuit d'air étant capable de diriger un flux d'air secondaire (F1, F2, F3) - formant au moins une partie du flux d'air (F) - vers l'habitacle (1) à travers au moins une ouverture (17, 18, 19), les ouvertures des premier, deuxième et troisième circuits d'air étant situées respectivement dans des première, deuxième et troisième zones de distribution distinctes (21, 22, 23) dans l'habitacle (1) ;
- un dispositif d'entrée de distribution (32) qui comprend pour chaque circuit d'air (11, 12, 13) un organe de régulation dédié (33, 34, 35) pour permettre à l'utilisateur de sélectionner manuellement le débit (Q1, Q2, Q3) du flux d'air secondaire (F1, F2, F3) dans ledit circuit d'air (11, 12, 13) ;
- une unité de régulation électronique (25) qui est reliée au dispositif d'entrée de distribution (32) et qui est capable de réguler les débits (Q1, Q2, Q3) des flux d'air secondaires (F1, F2, F3) selon le débit (Q1, Q2, Q3) du flux d'air secondaire (F1, F2, F3) manuellement sélectionné pour un circuit d'air (11, 12, 13),
**caractérisé en ce que** le dispositif d'entrée de distribution (32) ne comprend qu'un seul organe de régulation dédié (33, 34, 35) pour chaque circuit d'air et **en ce que** les actionnements manuels de chaque organe de régulation dédié (33, 34, 35) ne peuvent provoquer que des variations à sens unique du débit secondaire (Q1, Q2, Q3) dans le circuit d'air correspondant (11, 12, 13), de sorte que les débits (Q1, Q2, Q3) dans d'autres circuits d'air (11, 12, 13) soient alors automatiquement ajustés de manière à ce que la somme de tous les débits d'air secondaires (Q1, Q2, Q3) reste sensiblement constante.

2. Système selon la revendication 1, **caractérisé en ce que** le dispositif d'entrée de distribution (32) et l'unité de régulation électronique (25) sont conçus de sorte qu'un actionnement manuel d'un organe de régulation dédié (33, 34, 35) provoque une augmentation du débit (Q1, Q2, Q3) du flux d'air secondaire (F1, F2, F3) dans le circuit d'air correspondant (11, 12, 13).

3. Système selon la revendication 1 ou 2, **caractérisé en ce que** l'organe de régulation dédié de chaque circuit d'air (11, 12, 13) est une touche et **en ce qu'**une pression sur une touche dédiée (33, 34, 35) provoque une variation à sens unique du débit (Q1, Q2, Q3) du flux d'air secondaire (F1, F2, F3) dans le circuit d'air correspondant (11, 12, 13).

4. Système selon la revendication 3, **caractérisé en ce qu'**une pression sur une touche dédiée (33, 34, 35) provoque une augmentation du débit (Q1, Q2, Q3) du flux d'air secondaire (F1, F2, F3) dans le circuit d'air correspondant (11, 12, 13).

5. Système selon la revendication 2 ou 4, **caractérisé en ce que** le dispositif d'entrée de distribution (32) et l'unité de régulation électronique (25) sont conçus de sorte qu'un actionnement manuel dudit organe de régulation dédié (33, 34, 35) provoque en outre une diminution automatique du débit (Q1, Q2, Q3) d'au moins l'un des autres flux d'air secondaires (F1, F2, F3), le débit d'air global (Q) restant sensiblement constant.

6. Système selon l'une quelconque des revendications 1 à 5, **caractérisé en ce que**, en réponse à un actionnement manuel d'un organe de régulation dédié (33, 34, 35), l'unité de régulation électronique (25) est conçue pour ajuster automatiquement la variation du débit secondaire (Q1, Q2, Q3) dans un ou plusieurs autre(s) circuit(s) d'air (11, 12, 13), selon des règles programmées.

7. Système selon l'une quelconque des revendications 1 à 6, **caractérisé en ce que** chaque circuit d'air (11, 12, 13) est équipé d'au moins un régulateur de débit (26) qui est régulé par l'unité de régulation électronique (25) afin d'ajuster le débit (Q1, Q2, Q3) du flux d'air secondaire correspondant (F1, F2, F3) selon le débit (Q1, Q2, Q3) manuellement sélectionné par l'utilisateur pour un flux d'air secondaire (F1, F2, F3), le débit (Q1, Q2, Q3) de chaque flux d'air secondaire étant individuellement réglé à un niveau choisi parmi N niveaux, où N ≥ 3, la somme de tous les débits d'air secondaires (Q1, Q2, Q3) étant égale au débit d'air (Q).

8. Système selon l'une quelconque des revendications 1 à 7, **caractérisé en ce qu'**il comprend un afficheur (41) apte à montrer la distribution d'air actuelle.

9. Système selon la revendication 8, **caractérisé en ce que** l'afficheur (41) comprend, pour chaque circuit d'air (11, 12, 13), un ensemble (43, 44, 45) de N éléments (46, 46a, 46b), où N ≥ 3, le nombre d'éléments dans un ensemble qui est activé en fonction du débit secondaire actuel correspondant (Q1, Q2, Q3).

10. Système selon l'une quelconque des revendications 1 à 9, **caractérisé en ce que** la première zone de distribution (21) comporte le pare-brise (2) et/ou la zone de la tête de l'occupant de l'habitacle.

11. Système selon l'une quelconque des revendications 1 à 10, **caractérisé en ce que** la deuxième zone de distribution (22) comporte la zone du torse de l'occupant de l'habitacle et/ou la partie avant des vitres latérales (3).

12. Système selon l'une quelconque des revendications 1 à 11, **caractérisé en ce que** la troisième zone de distribution (23) comporte la zone des pieds de l'occupant de l'habitacle et/ou la zone située le long de la partie inférieure des portes latérales.

13. Procédé de régulation de la ventilation dans un habitacle (1) d'un véhicule qui est équipé d'un système de régulation de ventilation (4) comprenant :
- une unité (5) capable de fournir un flux d'air (F) dirigé vers l'habitacle (1) ;
- au moins des premier, deuxième et troisième circuits d'air (11, 12, 13), chaque circuit d'air étant capable de diriger un flux d'air secondaire (F1, F2, F3)
- formant au moins une partie du flux d'air (F) - vers l'habitacle (1) à travers au moins une ouverture (17, 18, 19), les ouvertures des premier, deuxième et troisième circuits d'air étant situées respectivement dans des première, deuxième et troisième zones de distribution distinctes (21, 22, 23) dans l'habitacle (1) ;
- un organe de régulation dédié (33, 34, 35) pour chaque circuit d'air (11, 12, 13) ;
- une unité de régulation électronique (25) qui est reliée au dispositif d'entrée de distribution (32) et qui est capable de réguler les débits (Q1, Q2, Q3) des flux d'air secondaires (F1, F2, F3)
**caractérisé en ce que** le procédé comprend les étapes suivantes qui consistent :
a) à détecter un actionnement manuel d'un élément de régulation dédié (33, 34, 35) ;
b) à déterminer, en fonction d'au moins l'actionnement manuel dudit organe de régulation dédié et en fonction du niveau actuel du débit secondaire correspondant, le nouveau débit secondaire (Q1, Q2, Q3), souhaité par l'utilisateur, dans le circuit d'air correspondant ;
c) à ajuster le débit secondaire (Q1, Q2, Q3) dans ledit circuit d'air correspondant (11, 12, 13) en fonction du débit d'air déterminé (Q1, Q2, Q3) ;
d) à ajuster les débits secondaires (Q1, Q2, Q3) dans d'autres circuits d'air (11, 12, 13) en fonction du débit d'air déterminé et selon des règles programmées,
et **caractérisé en ce que** l'actionnement manuel du seul organe de régulation dédié (33, 34, 35) du dispositif d'entrée de distribution (32) pour chaque circuit d'air (11, 12, 13) ne provoque qu'une augmentation du débit secondaire (Q1, Q2, Q3) dans ledit circuit d'air correspondant (11, 12, 13) et provoque une diminution du débit secondaire (Q1, Q2, Q3) dans au moins un autre circuit (11, 12, 13), de sorte que, dans l'étape d), les débits secondaires (Q1, Q2, Q3) dans d'autres circuits d'air (11, 12, 13) soient automatiquement ajustés de manière à ce que la somme de tous les débits d'air secondaires (Q1, Q2, Q3) reste sensiblement constante.

14. Procédé selon la revendication 13, **caractérisé en ce que** l'organe de régulation dédié (33, 34, 35) pour chaque circuit d'air (11, 12, 13) est une touche et **en ce qu'**une pression sur une touche dédiée (33, 34, 35) provoque une augmentation du débit (Q1, Q2, Q3) du flux d'air secondaire (F1, F2, F3) dans le circuit d'air correspondant (11, 12, 13).
